# EUROPEAN PATENT APPLICATION

(11) **EP 2 489 342 A1**
(43) Date of publication of application: **22.08.2012**
(21) Application number: 11290088.1
(22) Date of filing: 15.02.2011
(51) Int. Cl.: A61H 3/06, G01C 21/20

(54) **Method and assistive device for navigation**

(71) Applicant: Alcatel Lucent, 75007 Paris (FR)
(72) Inventor: Klein, Johann, 74321 Bietigheim Bissingen (DE)
(74) Representative: Wetzel, Emmanuelle

(57) **Abstract**

Method of navigation, the method comprising the steps of establishing (12) a navigational goal, navigating (13) toward the navigational goal by means of a geospatial approximation of the navigational goal, and, upon approaching the navigational goal, further navigating (14) toward the navigational goal based on a relative position to the navigational goal. Corresponding program storage device, computer program product, data stream, and personal navigation assistant.

## Description

### Field of the Invention

The invention relates to an assistive device for navigation.

### Background

This section introduces aspects that may be helpful in facilitating a better understanding of the invention. Accordingly, the statements of this section are to be read in this light and are not to be understood as admissions about what is in the prior art or what is not in the prior art.

Within the field of consumer electronics, a personal navigation assistant (PNA), also known as personal navigation device or portable navigation device (PND), is a portable electronic product which combines a positioning capability and navigation functions. In this context, navigation means the process of monitoring and controlling the location and movement of any pedestrian, craft, or vehicle.

A conventional PNA receives global navigation satellite signals for the purpose of determining the device's current location on Earth. Such devices typically provide latitude and longitude information and may also calculate altitude. An advanced model may further contain human-readable maps to be presented textually or graphically, or even provide suggested directions to the operator of a vehicle or vessel via text or speech.

### Summary

In one embodiment of the present invention, an approach to navigation is disclosed which may allow for improved accuracy. In another embodiment of the present invention, a method is disclosed that may be applied to support visually impaired or otherwise handicapped users in performing everyday tasks such as purchasing food supplies.

A method of navigation according to an embodiment of the invention comprises the initial step of establishing a navigational goal. Here, navigational goal means a projected endpoint of the navigator's position. A first phase of the method then comprises the step of navigating toward the navigational goal by means of a geospatial approximation of the same. In a subsequent phase, navigation toward the navigational goal continues based on a relative position to the navigational goal.

Further embodiments of the invention can be gathered from the following entirety of the herein application.

### Brief Description of the Figures

Some embodiments of apparatus and/or methods in accordance with embodiments of the present invention are now described, by way of example only, and with reference to the accompanying drawings, in which:

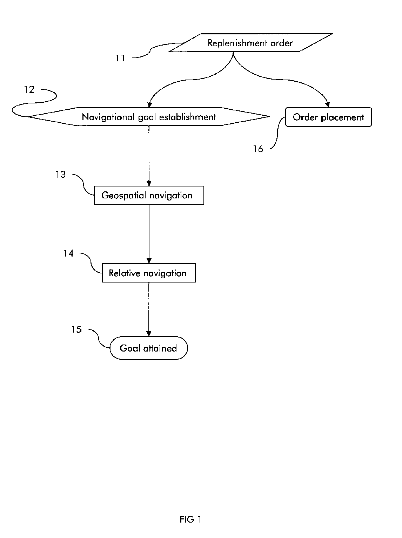

Figure 1 is a flowchart of a method according to an embodiment of the present invention; and

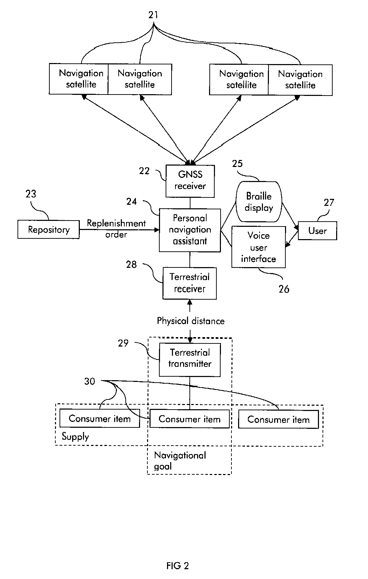

Figure 2 is a block diagram of a personal navigation assistant according to another embodiment of the present invention.

### Description of the Embodiments

In an embodiment of the present invention, a method is disclosed and performed by a personal navigation assistant (PNA). In the following, PNA means a fixed or portable electronic product which combines a positioning capability and navigation functions. Herein, the term is meant to include any suitably equipped and configured personal digital assistant (PDA), smartphone, or similar fixed or portable device.

In an optional first step 11, the PNA receives from a repository 23 a replenishment order for a consumer item 30. As examples, such repository 23 may take the form of a refrigerator, supply cabinet, or pantry. To automate this activity, anappliance may be equipped with home automation capabilities. Home automation, sometimes called domotics within the field of building engineering, is automation of any home, housework, or household activity for improved convenience, comfort, energy efficiency, or security. For instance, such appliances may be connected to the PNA through a local computer network or allow access through the Internet. Suitable device interconnection technologies include, but are not limited to, Bluetooth, IEEE 1394 (FireWire), IrDA, ZigBee, or Universal Serial Bus (USB).

In a second step 12, the PNA, based on the physical location of a supply of the consumer item 30, establishes a navigational goal. For instance, the PNA may maintain a catalog of suppliers for various item categories, such as a local food store for grocery. Such catalog may have been preconfigured by the end user, downloaded from the Internet, or dynamically generated based on the user's buying behavior, for example. The physical location of the selected supply may define the navigational goal and would typically be expressed in a specific coordinate system such as latitude and longitude, using, for example, the World Geodetic System or a country-specific alternative. The World Geodetic System (WGS) comprises a standard coordinate frame for the Earth, a standard spheroidal reference surface for raw altitude data, and a gravitational equipotential surface that defines the nominal sea level. WGS is commonly employed in cartography, geodesy, and navigation.

In an alternative embodiment, the catalog may store a street address or other means of physically locating the supply, and the corresponding coordinates may be obtained by querying an additional map database stored locally on the PNA or accessible through the Internet. A map database is typically based on some model of a road network, such as described by Geographic Data Files (GDF), an interchange file format for geographic data.

Beyond its physical location or address, the database may comprise further information on the supply, such as connection data for accessing a local wireless network near the supply. Optionally, the PNA may query the associated supplier for the availability of the desired item 30, such as by means of the Internet, for example.

In a third step 13, the PNA navigates toward the item 30 by means of a geospatial approximation of the latter. Typically, this navigational phase is effected using a global navigation satellite system (GNSS), that is, a satellite navigation system that provides autonomous geospatial positioning with global coverage. In this case, the PNA is equipped with a small electronic receiver 22 to determine its location in terms of longitude, latitude, and altitude at least to within a few meters. To this end, the receiver 22 uses time signals transmitted along a line-of-sight by radio from a plurality of satellites 21. Preferably, global coverage is achieved by a constellation of 20 to 30 Medium Earth Orbit (MEO) satellites 21 spread between several orbital planes. NAVSTAR Global Positioning System (GPS), GLONASS, Galileo, Compass, and IRNSS are some examples of GNSS that may be advantageously employed by the PNA to converge toward its navigational goal in this step.

In a fourth step 14, upon approaching the item 30, the PNA further navigates toward the item based on its relative position to the latter. This phase may be entered, inter alia, in response to the PNA's distance to the target falling below a predetermined value, on demand by the end user, or upon detecting a terrestrial signal associated with the item 30. To be able to track and identify the location of item 30 in this manner, the PNA is further equipped with a terrestrial receiver 28 adapted to interact with a terrestrial transmitter 29 positioned near item 30. Such system commonly referred to as a real-time locating system (RTLS), sometimes called real-time location system-that is, a system that provides the location of assets on a constant and recurrent basis. In this scenario, the receiver 28 and transmitter 29 may jointly form what is commonly referred to as a sensory network. Typically, the RTLS at hand would use a simple,node, commonly called badge or tag, attached to or embedded in the item 30 and comprising the transmitter 29. For improved interoperability, the supported RTLS may conform to the widely accepted ISO/IEC 24730 standard. In this context, the term "RTLS" is meant to include passive RFID indexing, Cellnet base station segment locators, and beacon systems.

An exemplary RTLS to be used for this purpose is radio-frequency identification (RFID), where the receiver 28 may commonly be called an RFID interrogator or reader, while the transmitter 29 would be part of a so-called RFID tag or label. This tag may take the form of a passive RFID tag, which may have no power source and requires an external electromagnetic field, typically generated by the receiver 28 or other component of the PNA 24, to initiate a signal transmission. An alternative active RFID tag would contain a battery and transmit its signal once the receiver 28 has been successfully identified. In this scenario, to eliminate the risk of battery depletion, the tag may make use of piezoelectric energy harvesting, that is, the conversion of mechanical strain into electric current or voltage. As a third option, the RFID tag may be battery-assisted passive (BAP), requiring the external source provided by the receiver 28 to wake up but having significantly higher forward link capability allowing for a greater range in this navigational phase.

As an alternative to the use of RFID, the RTLS employed may be based on Bluetooth or ZigBee, that is, open wireless technology standards for exchanging data over small distances using short wavelength radio transmission. In the former case, the receiver 28 would take the form of a Bluetooth client, while the transmitter 29 would form the complementary Bluetooth server. Apart from its function as an RTLS, use of Bluetooth would allow to create a secure personal area network (PAN) comprising the item 30 and PNA 24, thus enabling the exchange of data beyond those needed for locating the item 30 by the PNA 24. For instance, the resulting network connection may be employed to transmit a textual or other description of the item's location from the item 30 to the PNA 24 that could be rendered by the PNA 24 to support the end user during this final phase of navigation.

In the case of an RTLS based on cost-intensive technology such as Bluetooth or ZigBee, an alternative embodiment may make use of a transmitter 29 that is positioned in the mere vicinity of item 30 instead of directly attached to or embedded into the latter. For instance, in the case of a bulk article stored on a goods shelf, the transmitter 29 may be attached to or embedded into the shelf rather than the article itself.

To provide an alternative to the use of a full-featured RTLS, the fourth step 14 may be accomplished merely by ranging, that is, by metering the spatial distance between the receiver 28 and transmitter 29. As an example, a suitable metric may be based on a measurement of the power present in the radio signal reaching the receiver 28. One such measurement is known within the field of telecommunication as received signal strength indicator (RSSI). Another is received channel power indicator (RCPI), a term associated with wireless networking according to the IEEE 802.11 protocol family. In both cases, rather than providing straight directions toward the item 30, the PNA 24 would typically indicate the metered distance and leave it to the end user to fix the item's position, such as by taking repetitive measurements in varying reading points.

In an optional step 16, beyond physically navigating toward the item 30, the PNA 24 may place the replenishment order with the supplier once the latter has been determined. This would allow the supplier to stock up on the respective item 30 in due time. Moreover, such replenishment order may enable the supplier to commission the item 30 just in time for pickup. In order to connect to the supplier, the PNA 24 may employ the same or similar technology as is used for connecting to the appliance in the first step 11.

To allow visually impaired users to operate the PNA 24, the latter is equipped with a refreshable Braille display 25, sometimes called a Braille terminal. In the field of computer accessibility, by refreshable Braille display is meant any electromechanical device for displaying Braille characters, usually by means of raising dots through holes in a flat surface. In addition or as an alternative to such display, the PNA 24 may be outfitted with a speech synthesizer, allowing the user to switch between the two systems or use both at the same time depending on the circumstances. An optional Braille keyboard may be attached to allow the user to manually enter an order list.

To allow for even improved accessibility, the PNA 24 may comprise a voice user interface 26. Within the field of user interface techniques, by voice user interface (VUI) is meant a user interface where the modality is auditory and the interaction is through spoken language. In addition to speech output, a VUI-enabled PNA 24 may provide non-speech output, often referred to as nonverbal audio (NVA). Such output could include earcons, that is, auditory icons, or sounds designed to communicate a specific meaning, for example, to indicate the remaining spatial distance to the navigational goal.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A personal navigation assistant (24) comprising means (25, 26) for establishing a navigational goal (30), means (22) for navigating toward the navigational goal (30) using a geospatial approximation of the navigational goal (30), and means (28) for further navigating toward the navigational goal (30) based on a relative position to the navigational goal (30).

2. A personal navigation assistant (24) as in claim 1, the personal navigation assistant (24) comprising a refreshable Braille display (25).

3. A personal navigation assistant (24) as in claim 1 or2, the personal navigation assistant (24) comprising a voice user interface (26).

4. Method of navigation, the method comprising the steps of establishing (12) a navigational goal (30), navigating (13) toward the navigational goal (30) using a geospatial approximation of the navigational goal (30), and, upon approaching the navigational goal (30), further navigating (14) toward the navigational goal (30) based on a relative position to the navigational goal (30).

5. Method as in claim 4 wherein the step of navigating (13) toward the navigational goal (30) using the geospatial approximation is effected using a global navigation satellite system (21, 22).

6. Method as in claim 4 or 5 wherein the relative position to the navigational goal (30) is established using a terrestrial real-time locating system (28, 29).

7. Method as in claim 6 when performed by a personal navigation assistant (24), wherein the navigational goal (30) is defined as the position of an object (30) comprising a transmitter (29) and the personal navigation assistant (24) comprises a receiver (28).

8. Method as in claim 7 wherein the step of further navigating (14) toward the navigational goal (30) based on the relative position comprises metering a spatial distance between the transmitter (29) and the receiver (28) using a signal strength measured by the receiver (28).

9. Method as in claim 7 or 8 wherein the personal navigation assistant (24) comprises a radio-frequency identification interrogator and the object comprises a radio-frequency identification tag.

10. Method as in claim7, 8, or 9 wherein the personal navigation assistant (24) comprises a Bluetooth master and the object comprises a Bluetooth slave.

11. Method as in any of claims 4 to 10 comprising the preliminary step of receiving (11) from a repository (23) a replenishment order for a consumer item (30), wherein the navigational goal (30) is established (12) based on the physical location of a supply of the consumer item (30).

12. Method as in claim 11 comprising the additional step of placing (16) the replenishment order with a supplier.

13. A program storage device readable by a machine, tangibly embodying a program of instructions executable by the machine to perform a method according to any of claims 4 to 12.

14. A computer program product comprising computer-executable instructions for performing a method according to any of claims 4 to 12 when the program is run on a computer.

15. A data stream representative of a computer program according to claim 14.
